# EUROPEAN PATENT SPECIFICATION

(11) **EP 1 128 077 B1**
(45) Date of publication and mention of the grant of the patent: **07.04.2004**
(21) Application number: 99949022.0
(22) Date of filing: 13.10.1999
(51) Int. Cl.: F16B 19/10, B29C 45/14, B60R 13/02

(54) **CLAMP FOR FIXING PLATES AND PROCESS FOR THE FABRICATION OF SAID CLAMP**
KLAMMER ZUR BEFESTIGUNG VON PLATTEN UND VERFAHREN ZUR HERSTELLUNG SOLLCHER KLAMMER
CRAMPON DE FIXATION POUR PLAQUES, ET PROCEDE DE FABRICATION DUDIT CRAMPON

(30) Priority: 06.11.1998 ES 9802337
(43) Date of publication of application: 29.08.2001
(73) Proprietor: I.T.W. Espana, S.A., 08520 Barcelona (ES)
(72) Inventor: PARES ISANTA, Albert I.T.W. Espana, S.A., 08520 Barcelona (ES)
(74) Representative: Carpintero Lopez, Francisco
(86) International application number: PCT/ES1999/000324
(87) International publication number: WO 2000/028223

(56) References cited:
- DE-U- 8 507 143
- ES-A- 2 127 062
- FR-A- 2 214 348
- GB-A- 1 111 404
- US-A- 3 213 506
- US-A- 4 122 583
- US-A- 5 301 396

## Description

### OBJECT OF THE INVENTION

The present invention relates to a fastening clip for plates.

The clip proves particularly appropriate for fastening a panel of interior lining to bodywork of a motor vehicle.

The invention also concerns the procedure for manufacturing said clip.

The object of the invention is to achieve a clip which in addition to satisfying its classical function as a means of fastening one plate to another, ensures a perfect seal in the coupling of the clip itself to the plate supporting it.

### BACKGROUND TO THE INVENTION

Special application clips are known for use in the circumstances mentioned above, having a one-piece structure, plastic in nature, in which there is a head provided with a neck of suitable width for the thickness of the plate to be fastened, and an expandable locking boss, in the general form of a truncated cone, with a recessed step in the segment close to the head, so that this boss can be press-fitted, by elastic deformation of the same, into an orifice operationally made in the supporting sheet or plate, so that after fastening the clip to the first plate, coupling to the supporting plate proves practically instantaneous by simply pushing from the front.

On occasions it is desirable for the coupling to the supporting plate to be watertight, and in this sense is known, for example, the fastening device described in Spanish utility model 8700162, in which the clip, while maintaining its one-piece character and also the structure described above insofar as the head and the locking boss are concerned, incorporates between these elements a collar with a truncated cone shape which in the position of final attachment is deformed against the supporting plate to achieve the intended seal.

This seal, however, proves in practice to be very deficient, for two different and complementary reasons:
- Since the collar forms one piece with the rest of the clip and since the clip as a whole has to be made of a relatively stiff material, its capacity for deformation is slight and the crystallisation with time of the plastic material provokes a loss of elasticity which, in turn, results in a loss of watertightness.
- The actual shape of the clip requires the use of two half-moulds in its production process, so that corresponding to the union between the two half-moulds, burring occurs which prevents the correct seating of the collar against the supporting plate and which, as a consequence, also impairs the seal.

A different solution to the problem is that demonstrated in Spanish utility model 9200507, which also starts with the basic approach to clip structure insofar as the head and its locking boss are concerned; in this case, a washer is fitted to the internal partition of the head, said washer acting as a watertight seal and being over-moulded on top of said head.

This solution partly overcomes the problems outlined above, since although it permits the use of two different materials, one for the clip itself and the other for the watertight washer, in which respect it is possible to make use of the most suitable material, it continues to be necessary to make use of two half-moulds to produce the washer in question, bringing with it the same problem as before with respect to burrs occurring in correspondence with the joint where said half-moulds meet.

Documents FR-A-2214348, ES 2127062 A and GB 1111404, also show different solutions that do not disclose the features of the present invention.

### DESCRIPTION OF THE INVENTION

The clip proposed in the invention has been designed and structured in order to overcome the aforementioned problems in a fully satisfactory manner.

To this end and more specifically, said clip retains the properties of the utility model 9200507 mentioned insofar as it is comprised of two different types of material, one constituting the clip itself and the other constituting the watertight seal, but has the special particularity that said seal is implemented in the form of a collar which, instead of being attached to the outside of the head, fits into an operationally formed neck made between the head and the locking boss.

Moreover, the collar is moulded on the base body forming the clip itself, but through channels defined in this base body, having axially positioned access to the same, so that the injection of the material of which the collar is composed is done through said axial access in the base body, which permits a totally different type of mould to be employed, free of joints, obtaining thereby a collar which, in addition to being perfectly incorporated into the rest of the clip, is without seams or burrs that could impair it from the point of view of a watertight seal, the latter resulting perfect.

In accordance with the foregoing, the manufacturing process of the clip starts with obtaining, in a first moulding stage, the base body of the clip from a semi-rigid plastic material and employing a standard mould, however with the special particularity that, as already stated, in this first moulding stage an axial access is formed in the base body at the level of the free end of the head, which immediately thereafter is split into two channels which are elbowed outwards at ninety degrees and which open into the neck planned for constituting the collar.

Thereafter, in a second stage of moulding, the base body is inserted into a second mould, suitably adapted for this purpose, in which the collar is produced from rubber or any other adequate material, it being possible for this second mould to be of one piece insofar as the void where the collar is constituted is concerned, inasmuch as the reception of the material is produced axially, as already mentioned, and inasmuch as its nature (rubber or the like) permits the necessary deformation of said collar in its de-moulding in the final extraction of the piece.

### DESCRIPTION OF THE DRAWINGS

To complement the description being made and with the object of assisting in a better understanding of the features of the invention, in accordance with a preferred example of a practical embodiment of the same, a set of drawings is attached to this description, said drawings forming an integral part thereof, the following is shown:

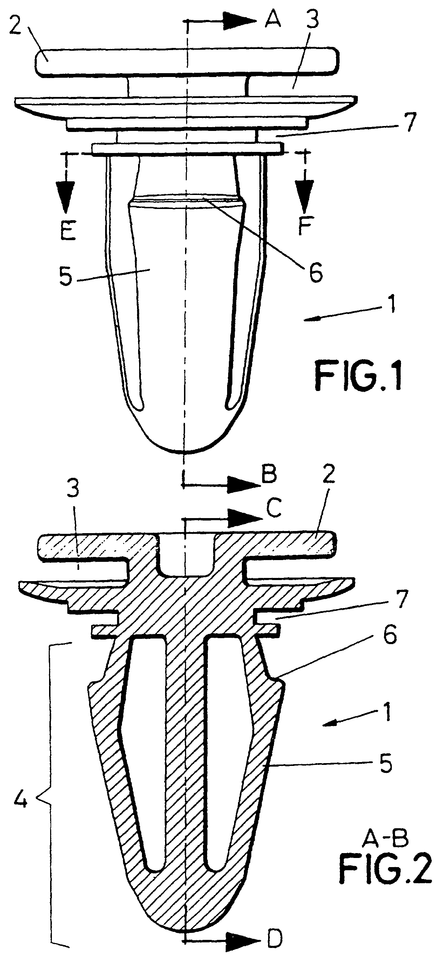

Figure 1. - Shows a drawing of a side elevation of the base body which forms part of the plate fastening clip which constitutes the object of the present invention.
Figure 2. - Shows a transverse section of the piece of the previous figure made on the plane of line A-B of said figure.

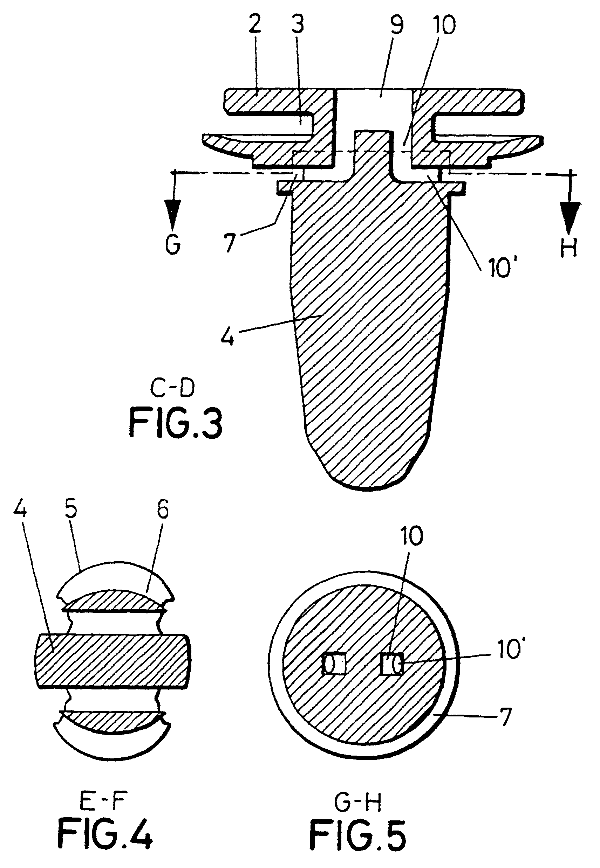

Figure 3. - Shows another transverse section of the base piece made, in this case, on the plane of line C-D of figure 2.
Figure 4. - Shows another detail in section of the same piece, in this case, on the plane of line E-F of figure 1.
Figure 5. - Shows a further section of the same piece made at a different level, in this case, on the plane of line G-H of figure 3.
Figure 6. - Shows a side elevation of the collar that completes the base piece of the preceding figure.
Figure 7. - Shows a transverse section of the same collar made on the plane of line I-J of figure 6.
Figure 8. - Shows another transverse section of the same collar, but in this case made on the plane of line K-L of figure 7.
Figure 9. - Shows a top view of the same collar of figures 6 to 8.
Figure 10. - Shows a side elevation of the clip as a whole, that is, with the two pieces shown in the preceding figures duly assembled.
Figure 11. - Shows a diametric section of the assembly shown in the previous figure, made on the plane of line M-N of said figure.
Figure 12. - Shows another view in diametric section of the same assembly shown, in this case made on the plane of line O-P of figure 11.
Figure 13. - Shows a top view of the clip of figure 10.

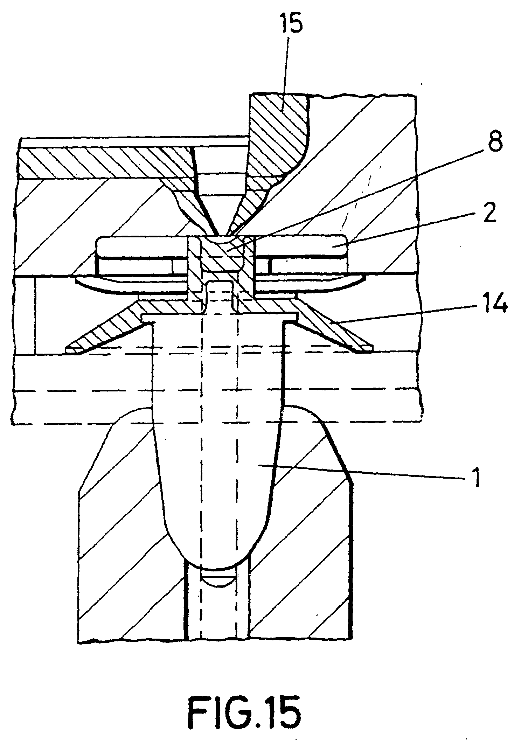

Figure 14 and 15. - Each show, finally, illustrations corresponding to the injection phase of the collar of rubber or similar material, by over-moulding on the base body.

### PREFERRED EMBODIMENT OF THE INVENTION

From the attached figures it can be seen how the clip proposed is built on a base body referred to throughout as (1), said body being obtained by means of an injection process based on a relatively stiff, plastic material, which defines, as in standard practice, a head (2) with a neck (3) for coupling to the plate to be fastened and extending into a locking boss (4), capable of contracting elastically, hollow and provided with side arms (5) which, with the classic truncated cone arrangement to facilitate the insertion of the boss into the fixing hole of the supporting plate, also incorporate the standard recessed step (6) for locking over said hole once the head (4) as a whole has passed through it.

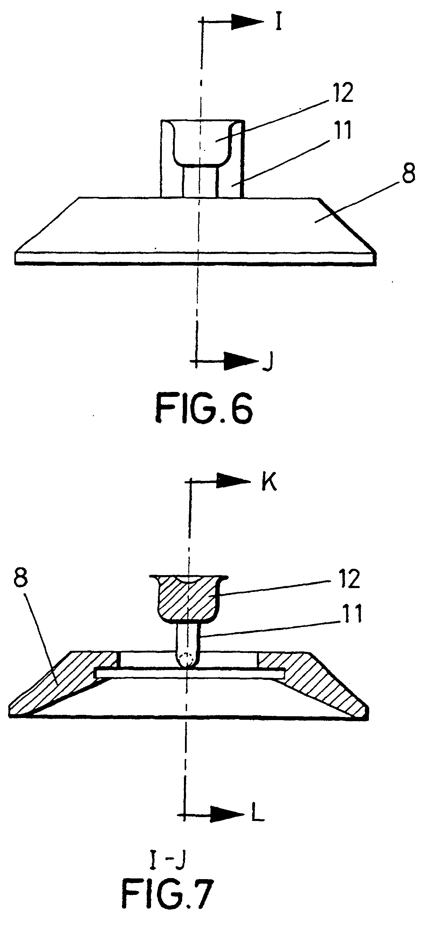

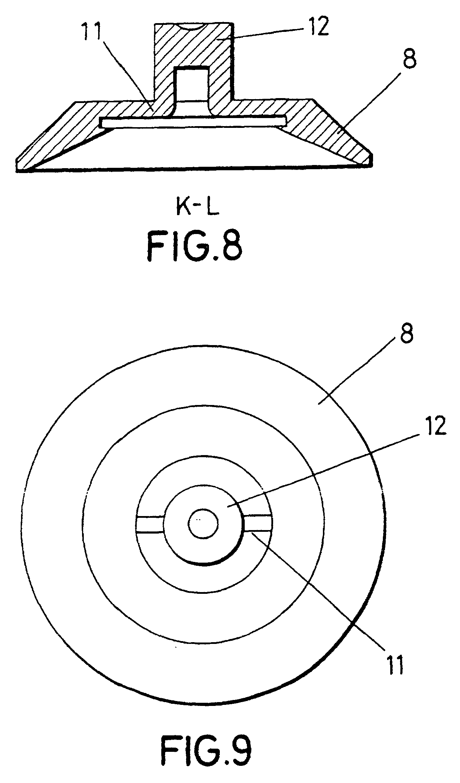

This basic piece (1) has the special feature of incorporating, between its head (2) and its base body (1), a perimetral neck (7) for the formation, by over-moulding, of the collar (8) shown in figures 6 to 9.

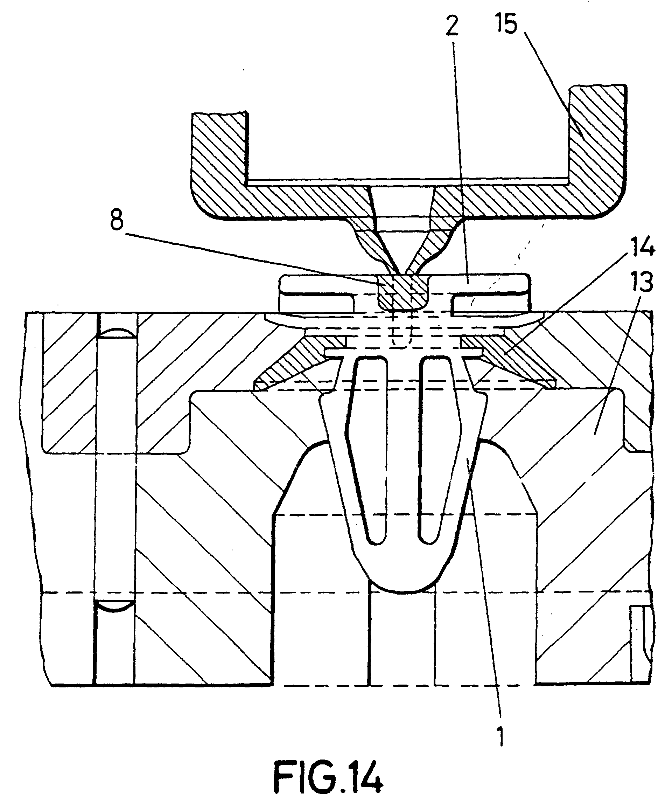

In addition the basic piece (1) also has an axial access (9) in the outer section of its head (2), which forks into two channels (10) which have their extremities (10') elbowed outwards and which open into the aforementioned neck (7), these channels (10-10') constituting, through the access (9), the means for conducting the material that forms the collar (8) in the over-moulding operation of said collar and as is illustrated in figure 14.

With respect to the collar (8) mentioned, which as already stated shall be obtained by making use of rubber or a similar material, offering a high factor of elasticity, it has the form of a truncated cone necessary for it to perform its function as a sealing element, by being deformed against the supporting plate, and, as well as this truncated cone segment (8) constituting the collar itself, it also incorporates in the form of a one-piece structure, ribs (11) which converge on an external boss (12), said ribs being obtained as a result of filling the channels (10) and (10') of the base body (1), in the aforementioned over-moulding operation.

In the figure 14, it can also be seen how, after injection of the basic piece (1), this is inserted in a second mould (13), collaborating with the latter in shaping the void (14) for obtaining the collar, the injection head (15) being applied to the axial access (9) in the head (2) of the basic piece (1) itself.

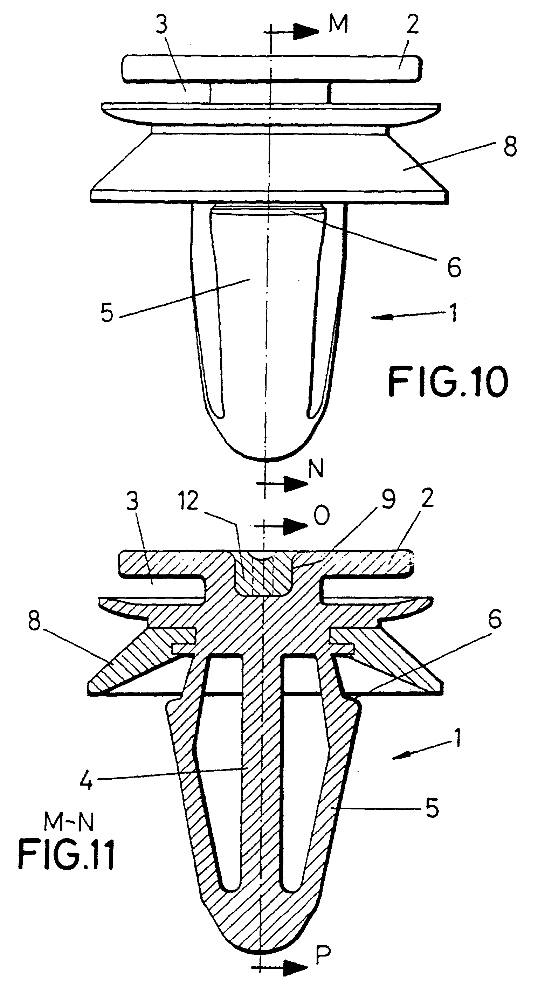

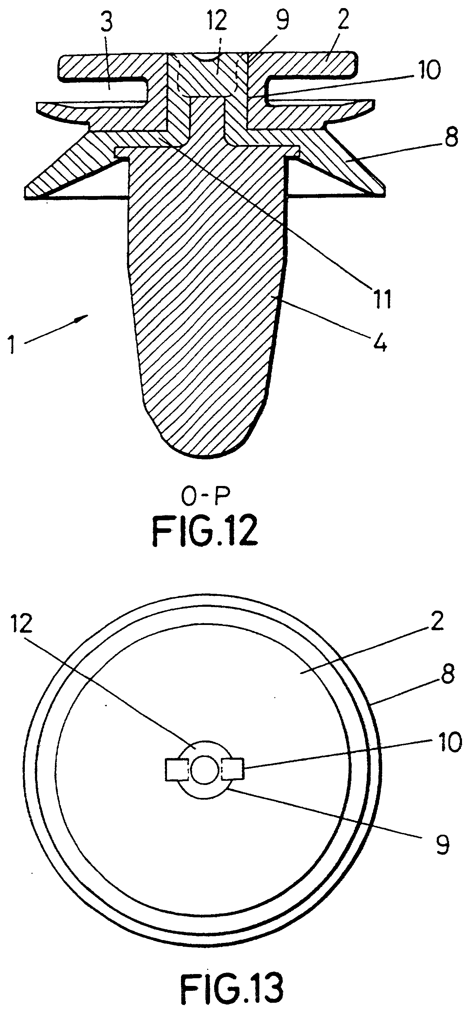

In this manner, as can be seen from figures 10 to 13, a clip is obtained which has practically a one-piece structure due to the over-moulding of the collar onto the base body and in which two elements participate which have totally distinct properties, one being of rubber or similar material and the other of noticeably stiff plastic, with a perfect finish for said collar (8) which, together with its inherent nature, ensures perfect sealing of the clip against the plate or sheet to which it has to be fastened.

## Claims

1. Fastening clip for plates, having a base body (1) comprising a head (2) with a neck (3) for coupling to a plate to be fastened and a locking boss (4) capable of contracting elastically and provided with a truncated cone arrangement to facilitate its insertion into a fixing hole of a supporting plate, the locking boss (4) having a recessed step (6) for locking over said hole once fully inserted, wherein in the area where the head (2) and the locking boss (4) of the base body (1) converge the clip has a perimetral neck (7) into which the inside edge of a collar (8) fits, said collar (8) being formed by overmoulding and made of rubber constituting a watertight seal, the base body (1) being fully made of a stiff material and comprising in its head (2) an axial access (9) which forks into two channels (10) with their extremities (10') elbowed outwards and opening into the neck (7), said collar (8) being provided with ribs (11) which converged on a external boss (]12), said ribs (11) and the external boss (12) being obtained as a result of filling the axial acces (9) and the channels (10, 10') in the overmoulding operation, the base body (1) and the collar (8) being thereby fixed to each other as practically an one-piece structure.

2. Procedure for manufacturing the clip of claim 1, comprising a first operational step of injection of the base body (1) in a first mould, and a second operational step, in which a second mould is used, in the core of which the base body (1) is inserted, wherein injection of the collar (8) is done by applying an injection head (15) with the material of which said collar (8) is made to an axial access (9) of the base body (1), and filling both the second mould housing (13) corresponding to said collar, the access (9) and the channels (10-10') of the base body (1) itself (1) with the material constituting the collar (8).

## Patentansprüche

1. Befestigungsklammer für Platten, die über einen Grundkörper (1) verfügt, der einen Kopf (2) mit einem Hals (3) umfasst, um die zu befestigende Platte anzuschliessen und einen Verschlussansatz (4), der in der Lage ist, sich elastisch zusammenzuziehen und über eine abgeschnittene Kegelanordnung verfügt, um die Einführung in ein Befestigungsloch einer Auflagerplatte einzuführen, wobei der Verschlussansatz (4) über eine ausgesparte Stufe (6) verfügt, das sich über dem Loch zu schliessen, wenn die Einführung vollständig ist, wobei in dem Bereich, in dem der Kopf (2) und der Verschlussansatz (4) zusammenlaufen, die Klammer über einen umfänglichen Hals (7) verfügt, in den der innere Rand eines Kragens (8) passt, wobei der besagte Kragen (8) durch Übergussformen gebildet wird und aus Gummi besteht, der einen wasserfesten Verschluss bildet, der Grundkörper (1) ist vollständig aus einem starren Material gebildet und umfasst in seinem Kopf (2) einen axialen Zugang (9) der sich in zwei Kanäle (10) aufteilt, deren Ende (10') nach Aussen stehen und zu dem Hals (7) hin offen sind, der besagter Kragen (8) verfügt über Spanten (11), die an einem externen Ansatz (12) zusammenlaufen, wobei die besagten Spanten (11) und der externe Ansatz (12) das Ergebnis des Füllens des axialen Zugangs (9) und die Kanäle (10, 10') während des Übergussformverfahrens sind, der Grundkörper (1) und der Kragen (8) so aneinander befestigt werden, praktisch als Struktur aus einem Stück.

2. Verfahren zur Herstellung der Klammer des Anspruchs 1, das einen ersten operativen Schritt der Injektion des Grundkörpers (1) in einer ersten Form umfasst und einen zweiten operativen Schritt, bei dem eine zweite Form verwendet wird, in deren Kern die Grundform (1) eingesetzt wird, wobei die Injektion des Kragens (8) unter Verwendung eines Injektionskopf (15), mit dem Material, aus dem der besagte Kragen (8) besteht, auf einen axialen Zugang (9) des Grundkörpers (1) durchgeführt wird und sowohl das zweite Formgehäuse (13), das dem besagten Kragen entspricht, als auch der Zugang (9) und die Kanäle (10, 10') des Grundkörpers (1) selbst mit dem Material, aus dem der Kragen (8) besteht, gefüllt werden.

## Revendications

1. Pince d'agrafage pour des plaques, ayant un corps de base (1) comprenant une tête (2) avec un collet (3) pour s'accoupler à une plaque à fixer et un bossage de verrouillage (4) apte à se contracter élastiquement et pourvu d'un aménagement tronconique pour faciliter son insertion dans un orifice de fixation d'une plaque de support, le bossage de verrouillage (4) ayant un échelon encastré pour se verrouiller sur ledit orifice une fois complètement inséré, dans lequel dans la zone où convergent la tête (2) et le bossage de verrouillage (4) du corps de base (1) la pince a un collet périmétral (7) dans lequel est disposé le bord intérieur d'un collier (8), ledit collier (8) étant formé par surmoulage et fait en caoutchouc en constituant un joint d'étanchéité, le corps de base (1) étant complètement fait en une matière rigide et comprenant dans sa tête (2) un accès axial (9) qui se divisent en deux canaux (10) avec leurs extrémités (10') coudées vers l'extérieur et s'ouvrant sur le collet (7), ledit collier (8) étant pourvu de nervures (11) qui convergent sur un bossage externe (12), lesdites nervures (11 ) et le bossage externe (12) étant obtenus comme résultat du remplissage de l'accès axial (9) et des canaux (10, 10') lors de l'opération de surmoulage, le corps de base (1) et le collier (8) étant ainsi fixés l'un à l'autre en constituant pratiquement une structure monobloc.

2. Procédé pour fabriquer la pince selon la revendication 1, comprenant une première étape opérationnelle d'injection du corps de base (1) dans un premier moule, et une seconde étape opérationnelle, dans laquelle est utilisé un deuxième moule, dans le noyau duquel est inséré le corps de base (1 ), dans lequel l'injection du collier (8) est réalisée en appliquant une tête d'injection (15) avec la matière dont est fait ledit collier (8), à un accès axial (9) du corps de base (1) et en remplissant le logement du deuxième moule (13) correspondant audit collier, l'accès (9) et les canaux (10,10') du propre corps de base (1) avec la matière constituant le collier (8).
